# EUROPEAN PATENT APPLICATION

(11) **EP 1 361 475 A1**
(43) Date of publication of application: **12.11.2003**
(21) Application number: 01273682.3
(22) Date of filing: 25.12.2001
(51) Int. Cl.: G02F 1/133, G02F 1/1368, G09G 3/36, G09G 3/20

(54) **LIQUID CRYSTAL DISPLAY DEVICE**

(30) Priority: 05.02.2001 JP 2001028602
(71) Applicant: INTERNATIONAL BUSINESS MACHINES CORPORATION, Armonk, NY 10504 (US)
(72) Inventor: TAKENAKA, Atsushi c/o Yamato-site IBM Japan Ltd., Yamato-shi, Kanagawa 242-8502 (JP); IKEZAKI, Mitsuru c/o Yamato-site IBM Japan Ltd., Yamato-shi, Kanagawa 242-8502 (JP); KUSAFUKA, Kaoru c/o Yamato-site IBM Japan Ltd., Yamato-shi, Kanagawa 242-8502 (JP)
(74) Representative: Ling, Christopher John
(86) International application number: JP0111407
(87) International publication number: WO02063383

(57) **Abstract**

Disclosed is to obtain a liquid crystal display device capable of eliminating a necessity of a flicker control after manufacturing the liquid crystal display device. A liquid crystal display device of the present invention is an IPS mode liquid crystal display device. A pixel electrode and a common electrode have an initial DC voltage component therebetween immediately after applying electric power. It is conceivable that this DC voltage component causes a flicker. If the DC voltage component is automatically reduced to a permissible value or smaller within a predetermined period of time after applying the electric power, the necessity of the flicker control by changing potential applied to an electrode in a pixel can be eliminated. Therefore, the liquid crystal display device must be constituted such that the initial DC voltage component is set sufficiently small and an electric charge can travel at high speed in a liquid crystal panel. As a technology for making the initial DC voltage component small, the present invention adopts a feed-through voltage compensatory drive system. A constitution of an opposite substrate is optimized so as to make a movement of the electric charge in the opposite substrate easy.

## Description

### BACKGROUND OF THE INVENTION

The present invention relates to a liquid crystal display device, more particularly, to an In-Plane switching (IPS) mode liquid crystal display device having a pixel electrode and a common electrode on one substrate.

The liquid crystal display device has been remarkably widespread as a display device for a personal computer or other types of monitor. This type of liquid crystal display device is generally constituted in such a manner that a backlight unit as a planar light source for illumination is disposed on the backside of a liquid crystal panel, and a liquid crystal plane having a predetermined area is irradiated to be in even brightness as a whole, thus visualizing an image formed on the liquid crystal plane of the liquid crystal panel. This liquid crystal panel has a constitution in which a drive voltage is applied to a liquid crystal filling a space between two glass substrates to drive the liquid crystal. In the liquid crystal panel, the liquid crystal is driven in the above-described manner to change alignment of the liquid crystal (molecules), whereby controlling polarization of transmitting light, thus displaying a desired image.

Incidentally, a twisted nematic (TN) mode has been well known for the liquid crystal panel thus constituted. According to this mode, an electrode for driving the liquid crystal is provided on one glass substrate and other glass substrate of the two substrates respectively, and an electric field is generated in a direction that the two substrates are linked, in other words, in a direction approximately perpendicular to the surfaces of the glass substrates, and thus the liquid crystal is driven.

However, a viewing angle of the liquid crystal panel employing such a system is narrow, and a technique called In-Plane Switching (IPS: transverse electric field) to improve the viewing angle is known. This is a technique that a drive voltage is applied to an electrode disposed on only one of the two glass substrates to generate an electric field in a horizontal direction along the substrate surface (transverse direction), thus driving the liquid crystal.

If a DC voltage is applied continuously to the liquid crystal, the liquid crystal deteriorates. Therefore, in both the TN mode and the IPS mode, the voltage applied to the liquid crystal is designed to be symmetrical about common potential.

However, due to manufacturing tolerance of the liquid crystal display panels, a voltage value to the same display signal changes in each product, the voltage being applied to the liquid crystal between a pixel electrode and a common electrode. Accordingly, an absolute value of each polarity of the voltage applied to the liquid crystal on the basis of the common potential becomes asymmetrical. Consequently, the voltage applied to the liquid crystal deviates from the designed value to one side (positive side or negative side with the common potential at the middle), and a flicker, in which a screen flicks, is generated.

Hereinafter, description will be made for occurrence of the flicker by using a concrete example. Note that this description is made for a purpose of describing a concept of the occurrence of the flicker; therefore, it is not necessarily accurate and applicable to actual products. When the liquid crystal display device is designed to have constant common potential of, for example, 7.5 V, images having equal brightness should be displayed in the case where the potential of 12.5 V is set to the pixel electrode and in the case where the potential of 2.5 V is set to the pixel electrode. However, due to the manufacturing tolerance, the voltage actually applied to the liquid crystal becomes equal to that of the case where the potentials of 12.7 V and 2.7 V are given to the pixel electrodes. consequently, a DC voltage component of 0.2 V on the positive side is generated. Since the image by 12.7 V is brighter than that by 2.7 V, the flicker is generated. Deviation of the voltage is mainly caused by the deviation of a storage capacitor and a parasitic capacitor from the designed value due to the manufacturing tolerance.

Conventionally, the foregoing problem has been solved by providing a circuit having a flicker control function on a control circuit board. The occurrence of the flicker can be prevented by eliminating the asymmetry of the absolute value of each polarity of the voltage applied to the liquid crystal. Conventionally, the asymmetry of the absolute value of each polarity of the voltage applied to the liquid crystal has been eliminated by changing the voltage value applied to a pixel from outside. As methods to change the voltage value applied to the pixel to from the outside as described above, the following two methods are known.

One method is to manually control the value of the common potential from outside to make the absolute value of each polarity symmetrical about the common potential. In the above-described example, the absolute value of each polarity can be made symmetrical by setting the common potential to 7.7 V. The other method is to manually change a gate voltage value of a TFT from outside, thus controlling the flicker.

However, there exist some problems in the use of the above-described flicker control circuit.

First, the deviation of the voltage value due to the manufacturing tolerance not only differs with the products but also occurs inside the plane of one product. For example, the deviation of the voltage value of the pixel on the left side of the screen and the deviation on the right side thereof are different from each other. Therefore, even if the common potential and the gate potential, which are common to all of the pixels, are controlled from the outside, unevenness of the voltage inside the plane could not be eliminated.

Second, the flicker control circuit as described above led to an increase of the number of parts of the liquid crystal display, causing an increase of the manufacturing cost thereof.

Third, in the flicker control process, the flicker is controlled manually from the outside for each of the products, and this process had been one of the causes to slow down the manufacturing speed.

### SUMMARY OF THE INVENTION

The present invention was made with taking the above-described technical problems into consideration, and the object thereof is to obtain a liquid crystal display device capable of eliminating the necessity of the flicker control after manufacturing the liquid crystal display device.

The inventors of the present invention conducted examinations and researches concerning the above-described problems. As a result, it was found that the necessity of the flicker control could be eliminated in the IPS mode liquid crystal display device.

Specifically, in the case where the absolute value of each polarity of the voltage applied to the liquid crystal on the basis of the common potential is asymmetrical, there exists a DC voltage component with a constant voltage value between the pixel electrode and the common electrode. The DC voltage component can be regarded as a stationary electric field applied to the liquid crystal material. In the IPS mode liquid crystal panel, the space between the pixel electrode and the common electrode can be modeled as a circuit in which a capacitor and a resistor are connected in parallel. Therefore, it can be considered that this electric field is generated because of the presence of a positive electric charge on one electrode side in the liquid crystal (pixel electrode side, for example) and a negative electric charge on the other electrode side therein (common electrode side, for example).

If the DC voltage component is equal to the permissible value or smaller, a flicker defect is not generated. Accordingly, the inventors reached the conclusion that the necessity of the flicker control can be eliminated if the DC voltage component automatically reduces itself to the permissible value or smaller.

Furthermore, in the liquid crystal display device, it takes a certain amount of time to display an image on a display screen after application of electric power thereto. This amount of time is almost equivalent to the time until a light source of a backlight (cold cathode fluorescent tube, for example) is turned on. The inventors found that if the above-described DC voltage component is reduced to the permissible value or smaller within the time until the image is displayed, the necessity of the above-described flicker control can be eliminated.

Two conditions must be fulfilled in order to realize the foregoing. One of the conditions is that an initial DC voltage component at the time of applying electric power is small, and the other condition is that an electric charge generating the DC voltage component to the liquid crystal material travels fast in the liquid crystal panel.

The inventors found that movement of the electric charge in an opposite substrate was extremely important as well as movement of the same in the liquid crystal material. It is considered that this is due to the fact that the resistance of the liquid crystal material is extremely large in the transverse direction in the IPS mode liquid crystal display device. Specifically, with regard to the electric field transmitting only through the liquid crystal material, the resistance in the transverse direction of the liquid crystal material is extremely large. Therefore, the electric charge cannot move fast. On the other hand, the resistance in a longitudinal direction is sufficiently small in comparison to that of the transverse direction. The electric field emitted from the one electrode and transmitting through the liquid crystal material in the longitudinal direction transmits through the opposite substrate, returns to the liquid crystal material to transmit in the longitudinal direction again, then enters the other electrode. It is conceivable that the presence of an electric field path having a small resistance value is important to reduce the DC voltage component. The reason is that if the electric charge can travel fast through this electric field path, the DC voltage component can be reduced equal to the permissible value or smaller within a predetermined period of time.

However, securing the high-speed traveling of the electric charge as described above alone is insufficient. This is because in the case where the initial DC voltage component is large, the DC voltage component value cannot be reduced to a desired value within the predetermined period of time. Consequently, the inventors found that the necessity of the flicker control can be eliminated by constituting a liquid crystal display device capable of reducing the initial DC voltage component and for the high-speed traveling of the electric charge. Note that though a physical property value of elements constituting a CF substrate or an array substrate is described, for example, in the Japanese Patent Laid-Open No. 2000-66222, the Japanese Patent Laid-Open No. 10(1998)-133205, the Japanese Patent Laid-Open No. 7(1995)-159786, none of these conventional technologies disclosed the problems solved by the present invention or means to solve the problems.

According to the findings as described above, a liquid crystal display device according to a first aspect of the present invention has a first substrate, a second substrate and a liquid crystal material sealed between the first and second substrates. The liquid crystal display device comprises a plurality of pixels arrayed in a matrix fashion. On the first substrate, each pixel in the plurality of pixels has a switching element, a pixel electrode connected to the switching element, a common electrode for generating an electric field applied to the liquid crystal material between the common electrode and the pixel electrode. The pixel electrode and the common electrode have an initial DC voltage component therebetween immediately after applying electric power to the liquid crystal display device, and the DC voltage component is automatically reduced from the initial value to a permissible value or smaller within a predetermined period of time after applying the electric power to the liquid crystal display device. The DC voltage component is automatically reduced from the initial value to the permissible value or smaller within a predetermined period of time after applying the electric power, whereby eliminating the necessity of a flicker control by changing potential applied to an electrode in the pixel.

Here, as the liquid crystal display device within the scope where the object of the present invention can be achieved, the followings can be enumerated: a liquid crystal panel having liquid crystal sealed between two opposite substrates; a liquid crystal module having a driver circuit or a backlight unit attached to the liquid crystal panel; and a liquid crystal display as an end product.

The liquid crystal display device according to a second aspect of the present invention is characterized in that, in the liquid crystal display device of the first aspect, the initial DC voltage component is 0.5 V or lower.

The liquid crystal display device according to a third aspect of the present invention is characterized in that, in the liquid crystal display device of the first aspect, the permissible value of the DC voltage component is 0.15 V or lower.

The liquid crystal display device according to a fourth aspect of the present invention is characterized in that, in the liquid crystal display device of the first aspect, the liquid crystal display device does not have any circuit for performing the flicker control by changing the potential applied to the electrode in the pixel from outside.

The liquid crystal display device according to a fifth aspect of the present invention is characterized in that, in the liquid crystal display device of the first aspect, the liquid crystal display device further comprises a plurality of scanning lines and signal lines, and the pixel electrode forms a storage capacitor between the pixel electrode and the scanning line.

A liquid crystal display device according to a sixth aspect of the present invention has a first substrate, a second substrate and a liquid crystal material sealed between the first and second substrates. Furthermore, the liquid crystal display device has a plurality of pixels arrayed in a matrix fashion. On the first substrate, each pixel in the plurality of pixels has a switching element, a pixel electrode connected to the switching element, a common electrode for generating an electric field applied to the liquid crystal material between the common electrode and the pixel electrode. The pixel electrode and the common electrode have an initial DC voltage component therebetween immediately after applying electric power to the liquid crystal display device, and the DC voltage component is automatically reduced from the initial value to 0.15 V or lower in five seconds after applying the electric power to the liquid crystal display device.

The liquid crystal display device according to a seventh aspect of the present invention is characterized in that, in the liquid crystal display device of the first, fifth or sixth aspect, the switching element is a TFT, and when a gate signal applied to the TFT drops, compensation drive is performed in which a compensation signal having reverse characteristics is applied through the storage capacitor.

The liquid crystal display device according to an eighth aspect of the present invention is characterized in that, in the liquid crystal display device of the seventh aspect, the second substrate has a first resin layer and a second resin layer formed inside the first resin layer, the first resin layer has resistivity of 2.5E+15 [ohm.cm] or lower, and the second resin layer has resistivity of 1E+00 to 1E+04 [ohm.cm].

The liquid crystal display device according to a ninth aspect of the present invention is characterized in that, in the liquid crystal display device of the seventh aspect, the first resin layer is a protection film, and the second resin layer is a black matrix layer.

A liquid crystal display device according to a tenth aspect of the present invention has a first substrate, a second substrate and a liquid crystal material sealed between the first and second substrates, and is driven at THz (T: natural number). This liquid crystal display device comprises a plurality of pixels arrayed in a matrix fashion. On the first substrate, each pixel in the plurality of pixels has a switching element, a pixel electrode connected to the switching element and a common electrode for generating an electric field applied to the liquid crystal material between the common electrode and the pixel electrode. The plurality of pixels are driven by a voltage of different voltage polarity in each frame, and, in one frame, the plurality of pixels include in each frame a first group of pixels driven by the voltage having a first voltage polarity and a second group of pixels driven by the voltage having a second polarity. The pixel electrode and the common electrode have an initial DC voltage component therebetween immediately after applying electric power to the liquid crystal display device, and the DC voltage component is automatically reduced from said initial value to a permissible value or smaller within a predetermined period of time after applying the electric power to the liquid crystal display device. In the case where the pixels of the first group are driven by the voltage having a voltage value allowing brightness to be the lowest and the pixels of the second group are driven by the voltage having a predetermined mean voltage value, the DC voltage component is equal to a permissible value or smaller, and thus an amplitude of a T/2Hz component of a transmitting light waveform from the liquid crystal display becomes ten times as large as that of a THz component or smaller.

The liquid crystal display device according to an eleventh aspect of the present invention is characterized in that, in the liquid crystal display device of the tenth aspect, the switching element is a thin film transistor (TFT), and when a gate signal applied to the TFT drops, compensation drive is performed in which a compensation signal having reverse characteristics is applied through a storage capacitor.

The liquid crystal display device according to a twelfth aspect of the present invention is characterized in that, in the liquid crystal display device of the tenth or the eleventh aspect, the second substrate has a first resin layer and a second resin layer formed inside the first resin layer, the first resin layer has resistivity of 2.5E+15 [ohm.cm] or lower, and the second resin layer has resistivity of 1E+00 to 1E+04 [ohm.cm].

The liquid crystal display device according to a thirteenth aspect of the present invention is characterized in that, in the liquid crystal display device of the first or the tenth aspect, the predetermined period of time after applying electric power is defined as time between the application of the electric power and displaying of an image on a display screen of the liquid crystal display device.

The liquid crystal display device according to a fourteenth aspect of the present invention is characterized in that, in the liquid crystal display device of the first aspect or the tenth aspect, the predetermined period of time after applying the electric power is five seconds after applying the electric power.

A liquid crystal display device according to a fifteenth aspect of the present invention has a first substrate, a second substrate and a liquid crystal material sealed between the first and second substrates. The liquid crystal display device has a plurality of pixels arrayed in a matrix fashion. On the first substrate, each pixel in the plurality of pixels has a TFT, a pixel electrode connected to the TFT, a common electrode for generating an electric field applied to the liquid crystal material between the common electrode and the pixel electrode. On the second substrate, each pixel in the plurality of pixels has a resin protection layer having resistivity of 2.5E+15 [ohm.cm] and a resin black matrix layer having resistivity of 1E+00 to 1E+04 [ohm.cm] or lower inside the protection layer. When a gate signal applied to the TFT drops, compensation drive is performed to the liquid crystal display device, in which a compensation signal having reverse characteristics is applied through a storage capacitor.

The liquid crystal display device according to a sixteenth aspect of the present invention is characterized in that, in the liquid crystal display device of the fifteenth aspect, the liquid crystal display device further comprises a plurality of signal lines for transmitting a display signal to the plurality of pixels and a plurality of gate lines for transmitting a gate signal to a gate of the TFT. The storage capacitor is formed between the pixel electrode and one of the plurality of gate lines.

### BRIEF DESCRIPTION OF THE DRAWINGS

For a more complete understanding of the present invention and the advantages thereof, reference is now madeto the following description taken in conjunction with the accompanying drawings.

### [Figure 1]

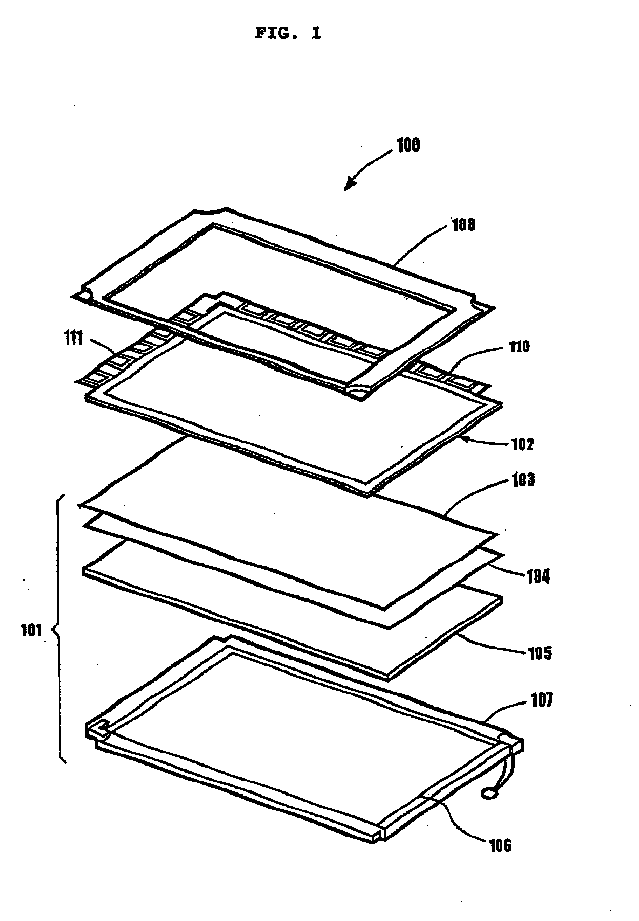

Fig. 1 is a schematic view showing a constitution of a liquid crystal display module of an embodiment of the present invention.

### [Figure 2]

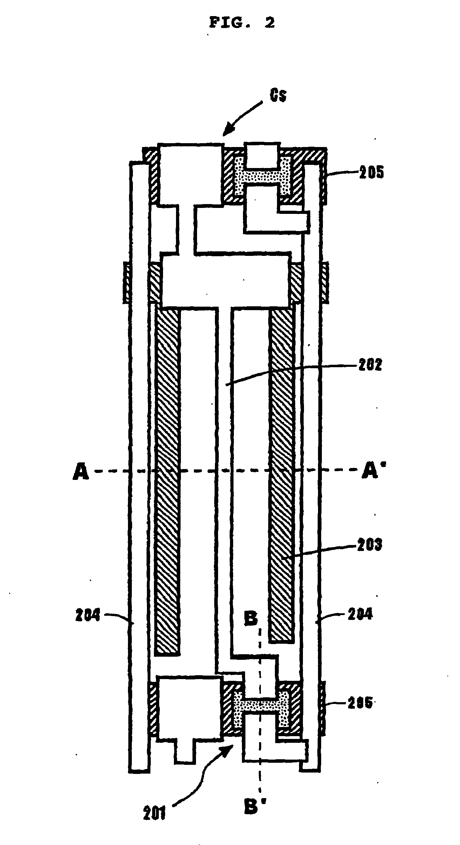

Fig. 2 is a schematic view showing a constitution of a pixel of the embodiment.

### [Figure 3]

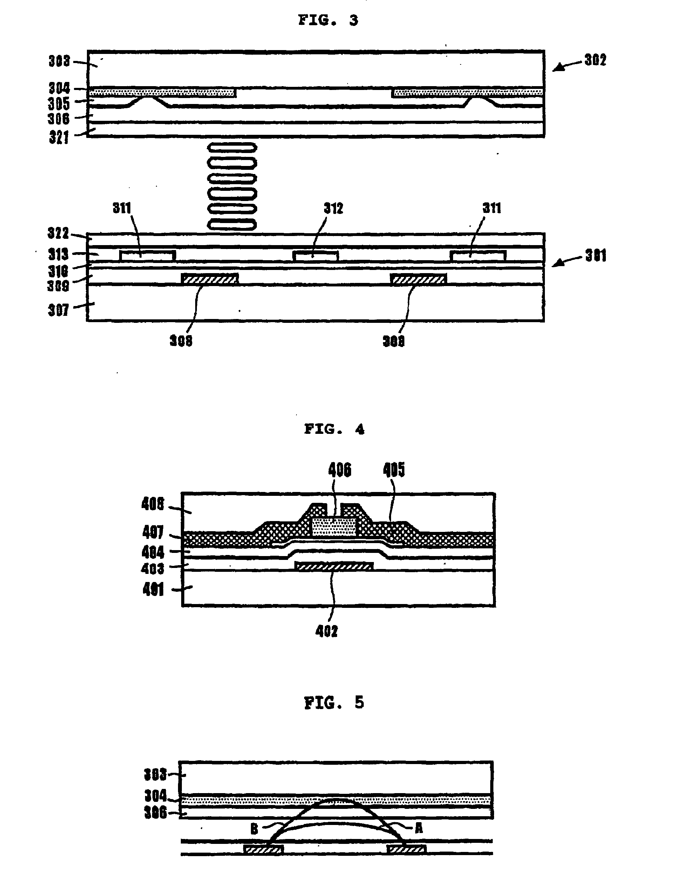

Fig. 3 is a sectional view schematically showing the constitution of the pixel of the embodiment.

### [Figure 4]

Fig. 4 is a sectional view schematically showing a constitution of a TFT of the pixel of the embodiment.

### [Figure 5]

Fig. 5 is a view for explaining an electric field path for reducing a DC voltage component in the embodiment.

### [Figure 6]

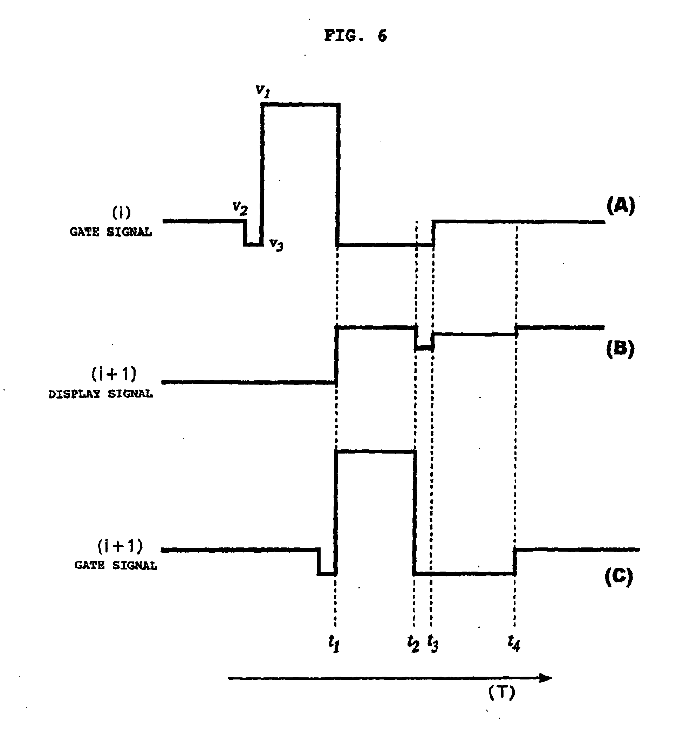

Fig. 6 is a timing chart for explaining a feed-through voltage compensatory drive in the embodiment.

### [Figure 7]

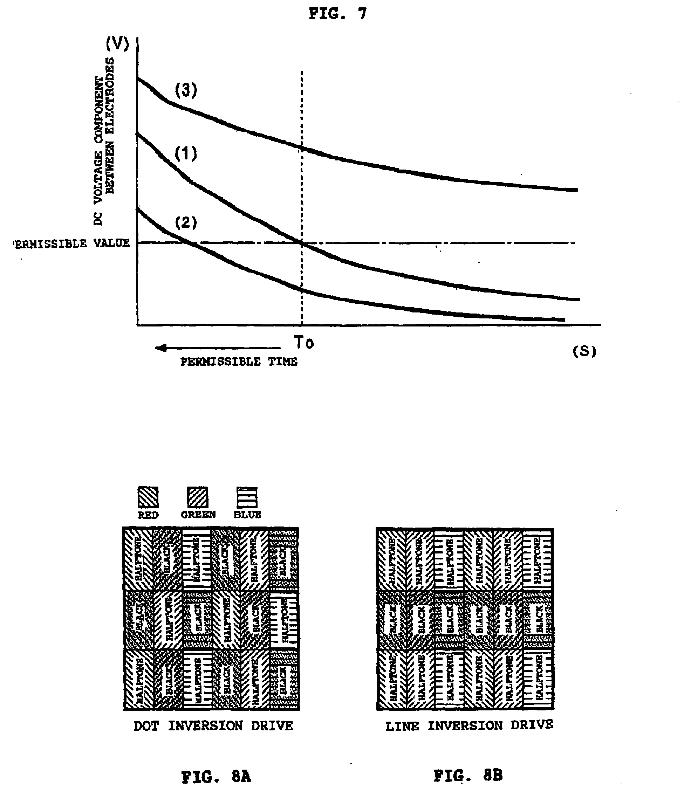

Fig. 7 is a graph for explaining changes in the DC voltage component of the liquid crystal display device with time according to the present invention and a conventional liquid crystal display device.

### [Figure 8]

Figs. 8A and 8B are diagrams for explaining flicker detection patterns in the embodiment.

### DETAILED DESCRIPTION OF THE PREFERRED EMBODIMENT

Hereinafter, a liquid crystal display device according to an embodiment of the present invention will be described in detail based on the accompanying drawings. This embodiment is an In-Plane Switching (IPS) drive mode liquid crystal display device, In this embodiment, description will be made for a liquid crystal display device capable of eliminating a necessity of a flicker control. To eliminate a necessity of a flicker control function, the liquid crystal display device must be constituted such that an initial DC voltage component is set sufficiently small and an electric charge can travel at high speed in a liquid crystal panel. In this embodiment, as a technique for making the initial DC voltage component small, a feed-through voltage compensatory drive system is adopted. This feed-through voltage compensatory drive system will be described later. Also, a constitution of an opposite substrate is optimized so as to make the movement of the electric charge in the opposite substrate easy.

Fig. 1 is a perspective view for explaining the entire constitution of a liquid crystal module of this embodiment. Fig. 1 is a constitutional view schematically showing a liquid crystal module 100 having a side-light type backlight unit. In Fig. 1, a reference numeral 101 denotes a backlight unit, 102 denotes a liquid crystal panel (liquid crystal cell) having a drive circuit attached thereto, and 103 denotes a diffusion sheet for making brightness even in a liquid crystal display panel. Also, a reference numeral 104 denotes a prism sheet for making light converge to enhance luminance of a front display surface, 105 denotes a light guide plate for guiding light traveling from a light source and diffusing the same, and 106 denotes a frame for accommodating components of the backlight unit 101 such as the light guide plate and the prism sheet.

The liquid crystal panel 102 has a display area constituted of a plurality of pixels arrayed in a matrix fashion and a frame area as an outer peripheral area of the display area. Also, the liquid crystal panel 102 has an array substrate having an array circuit formed thereon and an opposite substrate thereof, and liquid crystal is sealed therebetween. A reference numeral 107 denotes a cold cathode fluorescent tube as a light source, and 108 denotes a bezel for holding and protecting the liquid crystal cell 102 and the backlight unit 101 from outside. The backlight unit 101 is constituted of the diffusion sheet 103, the prism sheet 104, the light guide plate 105, the frame 106 and the cold cathode fluorescent tube 107. The cold cathode fluorescent tube 107 is disposed inside the frame 106 and is not directly described in the drawing. Note that, as a backlight unit, a direct backlight unit is also known. In this backlight unit, one or more light sources are disposed right under the display surface of the liquid crystal panel.

Each pixel in the display area performs color displaying of R, G or B, Of course, each pixel performs either black or white displaying on a monochrome display. In the display area on the array substrate, a plurality of signal lines and gate lines are arrayed in a matrix fashion. The signal lines and the gate lines are arrayed so as to cross each other approximately at a right angle. Each of the pixels applies an electric field to the liquid crystal based on a display signal voltage received from a driver IC. This driver IC is usually connected to the array substrate by a TAB but may be directly provided on a glass substrate of the array substrate.

Usually, a plurality of source driver IC 110 for the signal lines are provided on an X-axis side of a TFT array substrate, and a plurality of gate driver IC 111 for the gate lines controlling a gate voltage are provided on a Y-axis side thereof. A voltage received from the source driver IC 110 is transmitted to a pixel electrode via a source/drain of the TFT, and the pixel electrode and a common electrode apply an electric field to the liquid crystal. By changing this voltage, the voltage applied to the liquid crystal can be changed, thus controlling light transmissivity of the liquid crystal. A circuit applying common potential to the common electrode is constituted on a control circuit board (not shown).

Fig. 2 is a view showing a constitution of a pixel according to this embodiment. In Fig. 2, a reference numeral 201 denotes an amorphous silicon thin film transistor (TFT) as a switching element, 202 denotes a pixel electrode connected to the source/drain of the TFT, 203 denotes a common electrode for applying an electric field to the liquid crystal between the common electrode and the pixel electrode, 204 denotes a signal line for transmitting a display signal to the TFT, and 205 denotes a gate line for transmitting a gate voltage to a gate of the TFT.

The gate line, the signal line and the common electrode are typically formed of AlNd or MOW. The pixel electrode is usually formed of Al, Indium Tin Oxide (ITO) or the like.

Part of the pixel electrode is superposed on a scanning line of one upper stage via an insulator, forming a storage capacitor. This is a constitution so-called a Cs on-gate. Moreover, another part of the pixel electrode is superposed on the common electrode via an insulating layer, constituting a part of the storage capacitor.

The pixel is surrounded by two of the gate lines 205 extending in the X direction and two of the signal lines 204 extending in the Y direction. The comb-shaped common electrode 203 is disposed between these two signal lines 204. The pixel electrode 202 is formed between two lines of the common electrode 203. An electric field approximately parallel to the substrate surface is generated between the pixel electrode 202 and the common electrodes 203 located on both sides of the pixel electrode 202.

Note that the pixel electrode and the common electrode are not limited to the above-described constitution. For example, a constitution can be adopted in which the pixel electrode is formed in a shape of a comb and arranged so as to be engaged with the common electrode. Also, various modifications to the shape of the electrode is possible. For example, the pixel electrode may be formed in an L-shape. Furthermore, it is also possible that the common electrode is disposed as a layer upper than the pixel electrode to cover the entire area excluding an aperture of the pixel. To inhibit interactions between the pixel electrode and the signal lines, it is preferable to dispose the common electrode between the pixel electrode and each of the signal lines.

Fig. 3 is a sectional view taken along the line A-A' of Fig. 2. In Fig. 3, a reference numeral 301 denotes an array substrate as a first substrate, and 302 denotes a color filter substrate as a second substrate.

The color filter substrate 302 comprises a glass substrate 303, a black matrix layer 304 (hereinafter referred to as a BM layer) formed on the glass substrate 303, a color filter layer 305 of R, G and B (hereinafter referred to as a CF layer) formed on the BM layer 304, a protection film layer 306 formed on the CF layer 305 and an alignment film 321 formed on the protection film layer 306. A material obtained by dispersing a black pigment into acrylic resin or epoxy resin is typically used for the BM layer 304. In this case, the black pigment is carbon material. Part of the BM layer 304 contacts to the protection film layer 306.

A material obtained by dispersing any one of red, blue, and green pigments into acrylic resin or epoxy resin is generally used for the CF layer 305. A material obtained by depositing acrylic resin or epoxy resin is frequently used for the protection film 306, and the protection film 306 possesses a function for protecting a layer inside thereof and flattening the surface thereof. The alignment film is usually constituted of a polyimide material, and controls the alignment of the liquid crystal material in a state where no electric field exists. In this embodiment, the CF substrate is described as the opposite substrate ;however, the CF layer is excluded from the opposite substrate in the case of a monochrome display device.

Resistance values of the protection film 306 and the BM layer 304 are one of the important factors for achieving a fast movement of an electric charge in the CF substrate, which is the opposite substrate, It is necessary that resistivity of the protection film is sufficiently low, and at the same time, resistivity of the BM layer is also sufficiently low. The reason is as follows. Specifically, when considering a path of the electric field (line B in Fig, 5), which extends from the liquid crystal material via the alignment film to the protection film, BM layer and further to the protection film, the traveling speed of the electric charge cannot be secured unless resistances of both of the protection film and the BM layer are sufficiently small. Since the BM layer is used in both the color liquid crystal display and the monochrome liquid crystal display, the BM layer is highly versatile. In addition, differing from the CF layer, the BM layer possesses characteristics that the resistance value thereof can be easily controlled by the pigment. However, extremely small resistance value of the BM layer is not preferable. Therefore, the resistance value of the BM layer is preferably set within a predetermined range. A BM layer which uses metal such as chromium and has an extremely small resistance value is not preferable.

Accordingly, the resistivity of the BM layer 304 is preferably set at 1E+00 to 1E+04 (ohm.cm). A film thickness of the BM layer is about 1.5 micrometers, for example.

The resistivity of the CF layer 305 to R, G and B are, for example, approximately 3E+13, 1E+13 and 5E+11 (ohm.cm) respectively. Furthermore, a film thickness of the CF layer is about 2.0 micrometers.

The resistivity of the protection film layer 306 is preferably set at about 2.5E+15 (ohm.cm) or lower, more preferably, about 8.5E+14 (ohm.cm) or lower. A film thickness of the protection film layer is about 1.0 micrometer, for example.

The resistivity of the alignment film is set at about 1.0E+15 (ohm.cm), and a film thickness thereof is set to about 0.1 micrometer.

The array substrate 301 comprises, from the bottom, a glass substrate 307, a common electrode 308, a silicon oxide insulating layer 309, a silicon nitride insulating layer 310, signal lines 311 and a pixel electrode 312, a silicon nitride passivation layer 313 and an alignment film 322. The dimensions of each of the above-described elements will be exemplified below, A thickness of the common electrode 308 is about 0.3 micrometers when using Al and about 0.05 micrometers when using ITO. A thickness of the silicon oxide layer 309 is about 0.4 micrometers, and a thickness of the silicon nitride layer 310 is about 0.05 micrometers. Both the signal lines 311 and the pixel electrode 312 have a thickness of about 0.3 micrometers, and the passivation layer 313 has a thickness of about 0.2 micrometers.

Liquid crystal material is sealed between the array substrate and the CF substrate, and space between the two substrates is maintained at about 5 micrometers by a spacer.

Fig. 4 is a sectional view taken along the line B-B' of Fig. 2 for explaining a constitution of the TFT 201. In Fig. 4, a reference numeral 401 denotes a glass substrate, 402 denotes a gate line, 403 denotes a silicon oxide insulating layer, 404 denotes a silicon nitride insulating layer, 405 denotes an amorphous silicon layer, 406 denotes a silicon nitride layer, 407 denotes a source/drain electrode, and 408 denotes a silicon nitride passivation layer. An alignment film is formed thereon. Note that either of a top-gate structure and a bottom-gate structure can be adopted for the TFT. Also, a Metal Insulator Metal (MIM) is available for a switching element.

Description will be made for a display operation. The gate line as a scanning line transmits a gate signal sent from the gate driver IC 111 to the gate of the TFT. When the gate signal is turned ON, the TFT is turned ON, and the display signal transmitted from the data driver IC 110 is sent to the pixel electrode 202 via the signal line and the source/drain of the TFT. Common potential is given to the common electrode 203, and an electric field is generated between the pixel electrode and the common electrode. Intensity of the electric field is varied, thus controlling the alignment of liquid crystal molecules. The liquid crystal molecules change orientation of their longitudinal axis in a plane approximately parallel to the substrate. Because polarization of light transmitting through the liquid crystal material changes depending on birefringence of the liquid crystal molecules, an amount of light transmitting through a polarizer on the opposite substrate changes depending on the orientation of the liquid crystal molecules. The common potential is designed to be, for example, 7.5 V. Potential given to the pixel electrode is designed to be, for example, 13.5 V at the maximum and 1.5 V at the minimum.

The liquid crystal is driven by an alternating voltage. Specifically, polarity of the voltage applied to the liquid crystal in the pixel is inverted to positive or negative for each frame. In this case, the polarity of the voltage is determined on the basis of the common potential. Some drive methods of the liquid crystal are known, and a line inversion drive method and a dot inversion drive method are used.

The line inversion method is a drive method in which polarity of a signal voltage applied to a pixel electrode is inverted in each gate line. For example, a voltage of positive polarity is applied to odd-number pixel rows and a voltage of negative polarity is applied to even-number pixel rows in the first frame. A voltage of negative polarity is applied to odd-number pixel rows and a voltage of positive polarity is applied to even-number pixel rows in the second frame.

The dot inversion method is a drive method in which polarity of the applied voltage is inverted for each pixel in one row (gate line). In odd-number rows of the first frame, a voltage of positive polarity is applied to pixels in odd-number columns (odd-numbered signal lines) and a voltage of negative polarity is applied to pixels in even-number columns. In even-number rows of the first frame, a voltage of negative polarity is applied to pixels of odd-number columns, and a voltage of positive polarity is applied to pixels of even-number columns. In the second frame, the voltage polarity of each of the pixels is inverted. Note that, it is also possible to change the common potential according to progression of the frame without keeping the common potential at a constant value.

Next, description will be made for a feed-through voltage compensatory drive. Fig. 6 is a timing chart showing a relation between the gate signal and the voltage applied to the liquid crystal material. This embodiment adopts the feed-through voltage compensatory drive system. There exist some kinds of parasitic capacitor in the pixels of the liquid crystal display device. Among them, a kind of the parasitic capacitor between the gate line and the pixel electrode (gate and source, in this case, one located on the pixel electrode side is referred to as a source) has a great influence on the drive of the pixels. This parasitic capacitor is usually called a Cgs (alternatively, Cgd). Change in the gate potential causes a change in the display voltage via the Cgs. The feed-through voltage compensatory drive is a technology for applying a pulse of reverse polarity through the storage capacitor to the liquid crystal material when the gate signal of the TFT drops to a logic level "L". When the gate voltage drops, the value of the voltage applied to the liquid crystal material is reduced due to the parasitic capacitor Cgs. The above-described reduction of the voltage value can be compensated by applying the signal having reverse characteristics to a conductor portion constituting the storage capacitor together with the pixel electrode.

Hereinafter, description will be made for a driving operation of one pixel based on Fig. 6. A represents a gate signal applied to the i-th gate line. B represents intensity of a voltage applied to the liquid crystal material of one pixel in the i+1-th pixel row, C represents a gate signal applied to the i+1-th gate line. A TFT of a pixel in the i+1-th pixel row is controlled by the i+1-th gate line. The X-axis indicates the passage of time, and the Y-axis indicates a value of the signal. The gate signal has three potentials of V1, V2 and V3. For example, the potentials V1, V2 and V3 are respectively set at 27V, -5V and -9V on the basis of ground potential.

At t1, when a logic state of i+1-th gate becomes "H" (gate ON voltage: V1), the display signal is applied to the pixel electrode from the signal line via the TFT. Thereafter, at t2, the i+1-th gate becomes in the logic state "L" (gate OFF voltage: V3). At this time, since the gate potential drops from V1 to V3, the display voltage drops due to the parasitic capacitor Cgs between the gate and the source (pixel electrode). At t3, since potential of the i-th gate line rises from V3 to V2, the display voltage is increased via the storage capacitor Cs between the gate line and the pixel electrode. At t4, the i+1-th gate potential rises from V3 to V2. This rise allows the display voltage to rise via the parasitic capacitor Cgs. In the actual design, the liquid crystal display device is designed such that the sum of the drop and rise of the voltage due to the parasitic capacitor and the rise of a voltage via the storage capacitor Cs becomes zero.

Owing to the feed-through voltage compensatory drive described above, the reduction of the display voltage caused by the parasitic capacitor can be compensated. At the same time, it is also possible to keep the initial DC voltage component between the pixel electrode and the common electrode low. The change in the display voltage due to the manufacturing tolerance mainly results from the change in the parasitic capacitor Cgs. In a typical drive system, the contribution of the change in the parasitic capacitor to the change in the display voltage is determined depending on an amount of change in the capacitance in the entire pixel relative to the change in the parasitic capacitor. On the other hand, in the feed-through voltage compensatory drive, such contribution is determined depending on an amount of change in the storage capacitor Cs relative to the change in the parasitic capacitor. Accordingly, owing to the feed-through voltage compensatory drive, it is possible to keep the initial DC voltage component between the pixel electrode and the common electrode low.

Furthermore, the liquid crystal display device adopting the feed-through voltage compensatory drive system can be designed such that the change in the display voltage resulting from the change in the parasitic capacitor and the storage capacitor due to the manufacturing tolerance is made small. The liquid crystal display device thus designed makes it possible to obtain the above-described effect more surely.

Note that in the feed-through voltage compensatory drive, the Cs on-gate structure is not an essential factor. For example, a Cs line may be provided apart from the gate line, and the signal capable of obtaining the above-mentioned effect may be applied to the Cs line to realize the feed-through voltage compensatory drive.

Fig. 7 is a graph for comparing and describing the changes in the DC voltage components between in the conventional liquid crystal display and in the liquid crystal display of the present invention. In Fig. 7, the Y-axis represents a value of the DC voltage component between the pixel electrode and the common electrode. The X-axis represents the passage of time after turning on electric power. In Fig. 7, (1) and (2) represent model curves showing the change in the DC voltage component in the liquid crystal display device according to the present invention, and (3) represents a model curve showing the change in the DC voltage component in the conventional liquid crystal display device.

As described in the foregoing, the space between the pixel electrode and the common electrode is modeled as a circuit in which a capacitor and a resistor are connected in parallel. Therefore, the DC voltage component decreases exponentially from the initial value at the time immediately after turning on the electric power.

As apparent from Fig. 7, in the conventional liquid crystal display device, the DC voltage component larger than the permissible value exists after the passage of a predetermined period of time. On the contrary, the liquid crystal display device according to the present invention is constituted such that the DC voltage component is made equal to the permissible value or smaller within the predetermined period of time. The predetermined period of time may be set from the time of application of the electric power to the liquid crystal display device to the time of displaying an image on a display screen. This period of time is usually 3 to 5 seconds or shorter.

The permissible value of the DC voltage component is determined depending on the occurrence of the flicker, and is preferably set to about 0.15 V or lower. More preferably, it is set to about 0.12 V or lower, and most preferably to about 0.08 V or lower. The occurrence of the flicker can be determined from the characteristics of the display screen. This is performed by measuring and comparing wavelengths of lights of a specified frequencies, while displaying an image having a specified pattern on the screen.

Figs. 8A and 8B are diagrams for showing this specified pattern. Fig. 8A shows a pattern for a liquid crystal display device of the dot inversion drive method. Fig. 8B shows a pattern for a liquid crystal display device of the line inversion drive method. Red, blue and green indicate colors of the CF layer of each pixel. Also, Figs. 8A and 8B describe the case of a normally-white liquid crystal display device. A black pixel is driven by a voltage for allowing light transitivity to be the lowest. In the normally white mode, the black pixel is driven by a voltage of a maximum drive voltage value. Pixels of halftone colors are driven by a voltage of half the maximum drive voltage value. As apparent from Figs. 8A and 8B, a group of pixels having the same polarity is driven by a voltage of the same voltage value, and a group of pixels having different polarities is driven by voltages of the different voltage values. In the dot inversion drive, pixels (dots) adjacent in each of four directions perform the displaying with different gray scales. In the line inversion drive, pixels in the same row perform the displaying with the same gray scale, and the pixels in the adjacent rows perform the displaying with the different gray scales.

Here, when the liquid crystal display device is driven at 60 Hz, the patterns shown in Figs. 8A and 8B are displayed on a display device, and a comparison is made between an amplitude of a 60Hz component of a transmitting light waveform and an amplitude of a 30Hz component of a transmitting light waveform. In the display device driven at THz, the selected frequencies are THz and T/2Hz. The display device driven at THz displays T frames of images per second.

The amplitude of the 30Hz component of the transmitting light waveform is preferably ten times as large as that of the 60Hz component of the transmitting light waveform or smaller. Note that, the same rules as the foregoing are also applied to a liquid crystal display device of a two-dot inversion drive method, a liquid crystal display device of a two-line inversion drive method and a monochrome panel.

The same is also applicable to a liquid crystal display device driven by an interlace drive system, In the interlace drive system, a frame is divided into two fields to display an image. One of the divided fields drives odd-number pixel rows, and the other drives even-number pixel rows. Each of the fields is usually driven according to the dot inversion drive method or the line inversion drive method. Therefore, each of the fields has two kinds of drive voltage polarity. In a specified pattern, a pixel row not being driven in one field displays black. Among the pixels that are being driven, the pixels of one polarity display black, and the pixels of the other polarity display halftone colors. In one frame, for example, the pixels of positive polarity display black, and the pixels of negative polarity display halftone colors.

Since the value of the initial DC voltage component and its reduction ratio are in a complementary relation, specified ranges thereof can be set for each of them. A large initial DC voltage component requires a large reduction ratio. However, since there is an upper limit to the reduction ratio, the size of the initial DC voltage component is also limited accordingly. Thus, the initial DC voltage component is preferably set at 0.5 V or lower, more preferably at 0.25 V or lower, and most preferably at 0.2 V or lower. The liquid crystal display device according to the present invention enables the DC voltage component between the pixel electrode and the common electrode in about one second after turning on the electric power to be set within a range of 0.04 V to 0.06 V. Thus, the liquid crystal display device has no flicker defects.

Note that the description in the foregoing was made for an embodiment of the present invention, and the technical scope of the present invention is determined based on the descriptions in the following claims. Furthermore, it is apparent for the people skilled in the art that various modifications and additions for the above-described elements of the embodiment are possible within the scope of the present invention.

Although the preferred embodiment of the present invention has been described in detail, it should be understood that various changes, substitutions and alternations can be made therein without departing from spirit and scope of the inventions as defined by the appended claims.

## Claims

1. A liquid crystal display device having a first substrate, a second substrate and a liquid crystal material sealed between said first and second substrates, comprising:
a plurality of pixels arrayed in a matrix fashion,
wherein, on said first substrate, each pixel in said plurality of pixels has a switching element, a pixel electrode connected to said switching element, a common electrode for generating an electric field applied to said liquid crystal material between the common electrode and said pixel electrode,
said pixel electrode and said common electrode have an initial DC voltage component therebetween immediately after applying electric power to said liquid crystal display device,
said DC voltage component is automatically reduced from said initial value to a permissible value or smaller within a predetermined period of time after applying the electric power to said liquid crystal display device, and
said DC voltage component is automatically reduced from said initial value to the permissible value or smaller within the predetermined period of time after applying the electric power, whereby eliminating the necessity of a flicker control by changing potential applied to an electrode in said pixel.

2. The liquid crystal display device according to claim 1,
wherein said initial DC voltage component is 0.5 V or lower.

3. The liquid crystal display device according to claim 1,
wherein the permissible value of said initial DC voltage component is 0.15 V or lower.

4. The liquid crystal display device according to claim 1,
wherein said liquid crystal display device does not have any circuit for performing the flicker control by changing the potential applied to the electrode in said pixel from outside,

5. The liquid crystal display device according to claim 1,
wherein said liquid crystal display device further comprises a plurality of scanning lines and signal lines, and said pixel electrode forms a storage capacitor between the pixel electrode and the scanning line.

6. A liquid crystal display device having a first substrate, a second substrate and a liquid crystal material sealed between said first and second substrates, comprising:
a plurality of pixels arrayed in a matrix fashion,
wherein, on said first substrate, each pixel in said plurality of pixels has a switching element, a pixel electrode connected to said switching element, a common electrode for generating an electric field applied to said liquid crystal material between the common electrode and said pixel electrode,
said pixel electrode and said common electrode have an initial DC voltage component therebetween immediately after applying electric power to said liquid crystal display device, and
said DC voltage component is automatically reduced from said initial value to 0.15 V or lower in five seconds after applying the electric power to said liquid crystal display device.

7. The liquid crystal display device according to any one of claims 1, 5 and 6,
wherein said switching element is a TFT, and when a gate signal applied to said TFT drops, compensation drive is performed in which a compensation signal having reverse characteristics is applied through the storage capacitor.

8. The liquid crystal display device according to claim 7,
wherein said second substrate has a first resin layer and a second resin layer formed inside said first resin layer, said first resin layer has resistivity of 2.5E+15 [ohm.cm] or lower, and said second resin layer has resistivity of 1E+00 to 1E+04 [ohm.cm].

9. The liquid crystal display device according to claim 8,
wherein said first resin layer is a protection film, and said second resin layer is a black matrix layer.

10. A liquid crystal display device having a first substrate, a second substrate and a liquid crystal material sealed between said first and second substrates, and driven at THz (T: natural number), comprising:
a plurality of pixels arrayed in a matrix fashion,
wherein, on said first substrate, each pixel in said plurality of pixels has a switching element, a pixel electrode connected to said switching element and a common electrode for generating an electric field applied to said liquid crystal material between the common electrode and said pixel electrode,
said plurality of pixels are driven by a voltage of a different voltage polarity in each frame,
said plurality of pixels include in each frame a first group of pixels driven by the voltage having a first polarity and a second group of pixels driven by the voltage of a second polarity,
said pixel electrode and said common electrode have an initial DC voltage component therebetween immediately after applying electric power to said liquid crystal display device,
said DC voltage component is automatically reduced from said initial value to a permissible value or smaller within a predetermined period of time after applying the electric power to said liquid crystal display device, and
in the case where the pixels of said first group are driven by the voltage having a voltage value allowing brightness to be the lowest and the pixels of said second group are driven by the voltage having a predetermined mean voltage value, said DC voltage component is equal to the permissible value or smaller, and thus an amplitude of a T/2Hz component of a transmitting light waveform from said liquid crystal display device becomes ten times as large as that of a THz component or smaller.

11. The liquid crystal display device according to claim 10,
wherein said switching element is a TFT, and when a gate signal applied to said TFT drops, compensation drive is performed in which a compensation signal having reverse characteristics is applied through the storage capacitor.

12. The liquid crystal display device according to any one of claims 10 and 11,
wherein said second substrate has a first resin layer and a second resin layer formed inside said first resin layer, said first resin layer has resistivity of 2.5E+15 [ohm.cm] or lower, and said second resin layer has resistivity of 1E+00 to 1E+04 [ohm.cm].

13. The liquid crystal display device according to any one of claims 1 and 10,
wherein said predetermined period of time is defined as time between application of said electric power and displaying of an image on a display screen of said liquid crystal display device.

14. The liquid crystal display device according to any one of claims 1 and 10,
wherein said predetermined period of time after applying said electric power is five seconds after applying said electric power.

15. A liquid crystal display device having a first substrate, a second substrate and a liquid crystal material sealed between said first and second substrates, comprising:
a plurality of pixels arrayed in a matrix fashion,
wherein, on said first substrate, each pixel in said plurality of pixels has a TFT, a pixel electrode connected to said TFT, a common electrode for generating an electric field applied to said liquid crystal material between the common electrode and said pixel electrode,
on said second substrate, a resin protection layer having resistivity of 2.5E+15 [ohm.cm] or lower is provided and a resin black matrix layer having resistivity of 1E+00 to 1E+04 [ohm.cm] is provided inside said protection layer, and
when a gate signal applied to said TFT drops, compensation drive is performed in which a compensation signal having reverse characteristics is applied through a storage capacitor.

16. The liquid crystal display device according to claim 15,
wherein said liquid crystal display device further comprises: a plurality of signal lines for transmitting a display signal to said plurality of pixels; and a plurality of gate lines for transmitting a gate signal to a gate of said TFT, and
said storage capacitor is formed between said pixel electrode and one of said plurality of gate lines.
